(19) **Europäisches Patentamt / European Patent Office / Office européen des brevets**

(11) **EP 3 070 061 A1**

(12) **EUROPEAN PATENT APPLICATION**
published in accordance with Art. 153(4) EPC

(43) Date of publication:
**21.09.2016 Bulletin 2016/38**

(21) Application number: **13897281.5**

(22) Date of filing: **19.11.2013**

(51) Int Cl.:
*C03C 4/08* (2006.01)   *C03C 3/087* (2006.01)

(86) International application number:
**PCT/CN2013/087457**

(87) International publication number:
**WO 2015/070471 (21.05.2015 Gazette 2015/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.11.2013 CN 201310566199**

(71) Applicants:
• **He, Kaisheng**
  **Xiangtan, Hunan 411102 (CN)**
• **Hu, Yixiang**
  **Xiangtan, Hunan 411102 (CN)**
• **He, Haibo**
  **Xiangtan, Hunan 411102 (CN)**

(72) Inventors:
• **YANG, Qihan**
  **Xiangtan**
  **Hunan 411102 (CN)**
• **TAN, Sixi**
  **Xiangtan**
  **Hunan 411102 (CN)**
• **HU, Yang**
  **Xiangtan**
  **Hunan 411102 (CN)**
• **HU, Gan**
  **Xiangtan**
  **Hunan 411102 (CN)**

(74) Representative: **Lapienis, Juozas**
  **MSP Europe UAB**
  **21-92 Seimyniskiu Str.**
  **09236 Vilnius (LT)**

(54) **GLASS COMPOSITION ABSORBING ULTRAVIOLET RAY AND INFRARED RAY AND APPLICATION THEREOF**

(57)   An ultraviolet ray and infrared ray-absorbing glass composition includes the following basic glass components (weight ratio): 60% to 75% of $SiO_2$, 8% to 20 % of $Na_2O$, 3% to 12% of CaO, 0.1% to 5% of $Al_2O_3$, 2% to 5% of MgO, 0.02% to 7% of $K_2O$, 0.1% to 5% of BaO, 0.01% to 0.4% of $SO_3$ and the following ultraviolet ray and infrared ray-absorbing glass main body coloring and coordinating part: 0.22% to 1.35% of $Fe_2O_3$, 0.001% to 0.8% of $ZrO_2+HfO_2$, 0% to 0.5% of Cl, 0% to 2% of $B_2O_3$, 0.01% to 0.8% of $TiO_2$, 0.001% to 0.06% of CuO, 0% to 2.0% of Br, 0% to 0.02% of MnO, 0% to 2.0% of F, 0.001% to 0.5% of SrO, and 0.005% to 2.2% of $CeO_2$. The reduction oxidation ratio of $Fe_2O_3$ in the glass composition is 0.4 to 0.8. A certain amount of rare metals and rare earth metal compounds are added to the glass composition, which breaks through various limitations of existing insulating glass, reasonably controls the Chemical Oxygen Demand (COD) in raw materials, controls reduction oxidation ratios, effectively blocking ultraviolet rays, infrared ray and sunlight total energy while improving the transmittance of visible light to obtain insulating glass capable of intensively absorbing ultraviolet rays and near infrared rays.

Fig. 2

Printed by Jouve, 75001 PARIS (FR)

**Description**

**TECHNICAL FIELD OF THE INVENTION**

The present invention relates to a glass composition, and more particularly to a glass composition capable of intensively absorbing ultraviolet rays and infrared rays, and an application of the same.

**BACKGROUND OF THE INVENTION**

Due to global warming, related foreign companies, represented by Perfect Products Group (PPG) in America, have invested heavily in researches in the aspect of ultraviolet ray and near infrared ray-absorbing insulating glass. As many as more than 300 international patents in this have been applied. Among them, as many as more than 100 patents in the field have been applied in Japan, accounting for 1/3 of patents in the field of glass energy-saving and emission-reducing technology in the world. Major Japanese companies that have applied for patents include CENTRA, GLASS, CLLTD, NIPPON SHEETGLASS COLTD and ASAHIGLASS and so on.

A glass system capable of absorbing ultraviolet rays and near infrared rays, which is researched by NIPPON SHEET GLASS COLTD is soda-lime-silica glass having a coloring component $Fe_2O_3$ accounting for 0.4% to 0.58%, wherein FeO accounts for 20% to 30% of the total iron content, $CeO_2$ 0.8% to 1.8% while $TiO_2$ 0% to 0.5% and CoO 0.0001% to 0.002%. The glass is 2mm thick with a transmittance of visible light (LTA) of 75% to 79%, a Total Solar Ultraviolet Transmittance (TSUV) of 20% to 25%, and a Total Solar Energy Transmittance (TSET) of 52% to 55%, thus having general insulating and ultraviolet-proof effect.

British company Pilkington has applied for a glass composition patent (Chinese patent application Number 94191094.6). This kind of soda-lime-silica glass capable of absorbing infrared rays and ultraviolet rays has a $Fe_2O_3$ content of 0.25% to 1.75%. However, the content of FeO is only 0.007, thus infrared rays cannot be absorbed. For 4mm thick glass, the LTA is only 32%, the TSET is larger than or equal to 50% and the TSUV is smaller than or equal to 25%.

In most soda-lime-silica glass composition patents, colorants include Fe, Co, Cr, Mn, Ti and so on, and the color is characterized by a dominant wavelength of 480nm to 510nm and an excitation purity (Pe) which is not larger than 20%. For 5mm thick glass, the TSUV is 25% to 35%, the Transmittance of infrared ray (TSIR) is 20% to 25%, and the TSET 46% to 50%.

American company PPG has applied for patents US4381934, US4886539, US4792536 and 97113805 etc. and a method for producing float glass having super heat absorptivity by using a plurality of independent stages of melting and clarification is invented, characterized in that oxidation-reduction reaction conditions can be controlled effectively and glass having more than 50% of FeO, high LTA, low TSIR and super heat absorptivity is produced and has applied for a patent in China. The invention is entitled an infrared and ultraviolet radiation absorbing blue glass composition (application Number 98810129.7). The FeO ratio is as high as 35% to 60%, and for 4mm thick green glass, the LTA is 72.5%, the TSIR is 21%, the TSET is 47.5%; for 4mm thick blue glass, the LTA is 75%, the TSIR is 17.5%, the TSET is 49.5% and can be produced by a conventional float process. This is a patent technology of glass having super heat absorptivity, which represents the highest level in the glass industry in the world. However, ideal glass having super heat absorptivity cannot be realized yet.

In a nitrate-free method (patent Number: 98808824) for preparing a blue glass composition of American Ford Motor Company, basic components of a colorant of the blue glass composition include: 0.4% of $Fe_2O_3$, 0.15% of $MnO_2$, 0.005% to 0.025% of CoO, 0% to 1% of $TiO_2$ and a reducing agent anthracite etc. At a thickness of 4mm, the LTA of the blue glass is 50% to 68%, the TSIR is 21% to 30%, the TSUV is 25% to 40% and the TSET is 48% to 50%.

Japanese company Central Glass Co., Ltd. has applied for a patent (200480031885.6) of ultraviolet ray and infrared ray-absorbing green glass, wherein a colorant include 0.3% to 0.5% of $Fe_2O_3$, 0.8% to 2% of $CeO_2$, 0.1% to 0.7% of SnO and 0.8% to 2% of $TiO_2$. The dominant wavelength of the glass is 550nm to 570nm, the LTA is 70%, the TSUV is 20% and the TSIR is 25%.

French glass company Saint Gobain has applied for a patent (patent Number: 200680011222.7) of a glass composition for producing an ultraviolet ray and infrared ray-absorbing glass window, including 65% to 80% of $SiO_2$, 0% to 5% of $Al_2O_3$, 0% to 5% of $B_2O_3$, 5% to 15% of CaO, 0% to 2% of MgO, 9% to 18% of $Na_2O$, 0% to 10% of $K_2O$, 0% to 5% of BaO, 0.7% to 1.6% of $Fe_2O_3$, 0.1% to 1.2% of CeO and 0% to 1.5% of $TiO_2$. The reduction oxidation ratio is smaller than 0.23. At a thickness of 4mm, the LTA of the glass is larger than or equal to 70%, the TSIR is 28%, the TSUV is 18%, and the TSET is larger than or equal to 48%. Because the iron content is too high, the temperature difference between the upper part and the lower part of the melt glass is about 300 degrees centigrade, thus the shaping process is difficult and mass production cannot be realized.

Domestic patents related to heat-absorbing glass: there are very few researches on ultraviolet ray and near infrared ray-absorbing glass in China. Most patents in China in recent years, which go against and deviate from the spectral crystal lattice structure and shaping processes of soda-lime silicate glass, cannot be implemented. The only exception is a patent of "green glass having high ultraviolet ray and infrared ray absorptivity" (patent Number: 03117080.3) of Shanghai Yaohua Pilkington Glass Company. The glass is dark green. The TSUV is 17%, the TSIR is 28%, the LTA is smaller than 79% and the iron content is 0.5% to 0.9%. Due to a relatively low $Fe^{+2}$ content which is 18% to 28%, the Chemical Oxygen Demand (COD) chemical oxygen value is low, the temperature difference between the upper part and the lower part of the melt glass is large, the shaping process is difficult and can be hardly implemented, and the heat absorbing effect is bad.

Shenzhen Southern Glass Group has applied for a patent of "green glass selectively absorbing solar spectrum" (application Number: 200410051479.8). The LTA of the glass is larger than or equal to 70%, the TSUV is smaller than or equal to 16%, the TSIR is relatively low, the TSET is larger than or equal to 50% and the dominant wavelength is 495nm to 520nm.

Luoyang Float Glass Group has applied for a patent of "vehicle green glass colorant" (application Number: 200510107206.5), wherein the use amount of $Fe_2O_3$ is 0.4% to 1.5% and bivalent iron $Fe^{+2}$ only accounts for 25% to 40% of the total iron content, thus near infrared rays cannot be absorbed obviously. The LTA is larger than or equal to 70%, the TSUV is smaller than or equal to 15% and the TSET is larger than or equal to 50%, thus resulting in bad heat insulating effect.

Fuyao Glass Group has applied for a patent of "ultraviolet-proof soda lime-silicate glass" (application Number: 200810072276.5). The $Fe_2O_3$ content of the glass is 0.3% to 1.1%, the oxidation reduction coefficient is only 0.22 to 0.36, the LTA is larger than or equal to 70%, the TSUV is smaller than or equal to 15%, and the glass has a low near infrared absorptivity. In a patent of infrared insulating heat absorbing glass (application Number: 201110189471.8), since the $SnO_2$ content and the ZnO content are too high, flaws are easily generated in the glass surface, and the glass can be hardly shaped through a float process. In addition, the LTA is seriously affected and the insulating effect is not ideal.

To sum up, the technological level of glass having super heat absorptivity both at home and abroad are trapped in using ferrous oxides alone to reduce the transmittance of near infrared rays while using ferrous oxides alone to reduce the transmittance of near infrared rays can be hardly achieved by the prior art. In physical linear optics, it is very difficult to enable lights of a certain wave band to pass while enabling absorption of lights of other wave bands. If the content of $Fe^{2+}$ iron ions is improved only by adding a large amount of iron oxide to glass, the LTA of the glass will be largely reduced, and the glass is easily colored in amber to affect the appearance, making it difficult to obtain insulating glass with high LTA and low TSIR, TSUV and TSET.

## SUMMARY OF THE INVENTION

The problem to be solved by the present invention is to provide a glass composition capable of improving ultraviolet ray and infrared ray absorption of glass. By adding a glass main body coloring and coordinating part containing a certain amount of rare metals and rare earth metal compounds to a glass composition, a glass composition with high heat insulation and high transmittance is obtained.

The present invention provides an ultraviolet ray and infrared ray-absorbing glass composition, including the following basic glass components and an ultraviolet ray and infrared ray-absorbing glass main body coloring and coordinating part, wherein the basic glass components (weight ratio) include: 60% to 75% of $SiO_2$, 8% to 20 % of $Na_2O$, 3% to 12% of CaO, 0.1% to 5% of $Al_2O_3$, 2% to 5% of MgO, 0.02% to 7% of $K_2O$, 0.1% to 5% of BaO, 0.01 % to 0.4% of $SO_3$; and the glass main body coloring and coordinating part includes: 0.22% to 1.35% of $Fe_2O_3$, 0.001% to 0.8% of $ZrO_2+HfO_2$, 0% to 0.5% of Cl, 0% to 2% of $B_2O_3$, 0.01% to 0.8% of $TiO_2$, 0.001% to 0.06% of CuO, 0% to 2.0% of Br, 0% to 0.02% of MnO, 0% to 2.0% of F, 0.001% to 0.5% of SrO, and 0.005% to 2.2% of $CeO_2$. Preferably, the ultraviolet ray and infrared ray-absorbing glass main body coloring and coordinating part further includes the following auxiliary components (weight ratio): 0% to 0.01% of $WO_3$, 0% to 0.3% of $P_2O_5$, 0% to 0.03% of ZnO, 0% to 0.015% of $Cr_2O_3$, 0% to 0.1% of $Sb_2O_3$.

When the thickness of the glass composition is 2.0mm to 5.0mm, the ultraviolet ray and infrared ray-absorbing glass main body coloring and coordinating part includes the following components (weight ratio): 0.5% to 1.2% of $Fe_2O_3$, 0.002% to 0.5% of $ZrO_2+HfO_2$, 0% to 0.3% of Cl, 0% to 1% of $B_2O_3$, 0.01% to 0.5% of $TiO_2$, 0.002% to 0.01% of CuO, 0% to 1.5% of Br, 0% to 0.015% of MnO, 0% to 1.8% of F, 0.002% to 0.2% of SrO, and 0.01% to 1.8% of $CeO_2$, wherein when the glass composition is prepared, the reduction oxidation ratio of $Fe_2O_3$ in the glass composition is controlled in the range of 0.4 to 0.8

Specifically, when preparing glass with different thicknesses, besides the main components, the glass main body coloring and coordinating part may further include the following auxiliary components: when the thickness of the glass composition is 2.0mm, the auxiliary components (weight ratio) include: 0.003% to 0.01% of $WO_3$, 0.01% to 0.1% of $P_2O_5$, 0.01% to 0.03% of ZnO, 0.005% to 0.015% of $Cr_2O_3$, 0.02% to 0.1% of $Sb_2O_3$; when the thickness of the glass composition is 4.0mm, the auxiliary components (weight ratio) include: 0.005% to 0.01% of $WO_3$, 0.01% to 0.05% of $P_2O_5$, 0.005% to 0.03% of ZnO, 0% to 0.015% of $Cr_2O_3$, 0.01% to 0.05% of $Sb_2O_3$; when the thickness of the glass composition is 5.0mm, the auxiliary components (weight ratio) include: 0% to 0.01% of $WO_3$, 0.01% to 0.05% of $P_2O_5$,

0.01% to 0.05% of $Sb_2O_3$.

When the thickness of the glass composition is 2mm, the dominant wavelength thereof is 470nm to 530nm; the LTA of the glass at 400nm to 700nm is larger than or equal to 78.1%; the sunlight white balance transmittance (LTS) at 400nm to 760nm is larger than or equal to 73.2%; the Transmittance of UVc (TSUVc) at 200nm to 300nm is smaller than or equal to 0.1%; the ransmittance of UVb (TSUVb) at 300nm to 360nm is smaller than or equal to 3%; the Transmittance of UVa (TSUVa) at 360nm to 400nm is smaller than or equal to 30% to facilitate sterilization and disinfection; the TSIR at 800nm to 2500nm is smaller than or equal to 16.5%; the TSET at 300nm to 2500nm is smaller than or equal to 39.3%; the Pe is smaller than or equal to 10% and the Shading Coefficient (SC) is smaller than or equal to 0.62.

When the thickness of the glass composition is 4mm, the dominant wavelength thereof is 470nm to 530nm; the LTA of the glass at 400nm to 700nm is larger than or equal to 73.2%; the LTS at 400nm to 760nm is larger than or equal to 70.8%; the TSUVc at 200nm to 300nm is smaller than or equal to 0.1%; the TSUVb at 300nm to 360nm is smaller than or equal to 3%; the TSUVa at 360nm to 400nm is smaller than or equal to 30% to facilitate sterilization and disinfection; the TSIR at 800nm to 2500nm is smaller than or equal to 13%; the TSET at 300nm to 2500nm is smaller than or equal to 35%; the Pe is larger than or equal to 12% and the SC is smaller than or equal to 0.54.

when the thickness of the glass composition is 5mm, the dominant wavelength thereof is 470nm to 530nm; the LTA of the glass at 400nm to 700nm is larger than or equal to 74.6%; the LTS at 400nm to 760nm is larger than or equal to 70.13%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12%; the TSET at 300nm to 2500nm is smaller than or equal to 34.5%; the Pe is larger than or equal to 15% and the SC is smaller than or equal to 0.53.

When the thickness of the glass composition is 6mm to 15mm, in the ultraviolet ray and infrared ray-absorbing glass main body coloring and coordinating part, $Fe_2O_3$ accounts for 0.22% to 0.5%.

When the thickness of the glass composition is 6mm, the dominant wavelength thereof is 470nm to 530nm; the LTA of the glass at 400nm to 700nm is larger than or equal to 69.2%; the LTS at 400nm to 760nm is larger than or equal to 63.8%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 14.5%; the TSET at 300nm to 2500nm is smaller than or equal to 34.3%; the Pe is larger than or equal to 12% and the SC is smaller than or equal to 0.525.

When the thickness of the glass composition is 12mm, the dominant wavelength thereof is 470nm to 530nm; the LTA of the glass at 400nm to 700nm is larger than or equal to 66.2%; the LTS at 400nm to 760nm is larger than or equal to 62.5%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12.5%; the TSET at 300nm to 2500nm is smaller than or equal to 33.3%; the Pe is larger than or equal to 15% and the SC is smaller than or equal to 0.52.

In the present invention, the components of the glass composition exclude any one of Ni, Cd, As, Pb and Be to avoid spontaneous rupture of the glass due to thermal expansion and contraction during a tempering process or long-term use of the glass on which nickel sulfite stones are generated, thereby ensuring use security of the glass.

The ultraviolet ray and infrared ray-absorbing glass composition of the present invention is applied to glass for building doors and windows, curtain wall glass, roof lighting, insulating and waterproof glass, vehicle window glass or bulletproof glass, wherein the vehicle window glass is produced by tempering at least one piece of the glass composition, or is produced by laminating at least one piece of the glass composition and at least one piece of ordinary float or Glaverbel glass. In an embodiment of the present invention, the vehicle window glass is a front windshield; the LTA is larger than or equal to 70%; the wavelength spectral transmittance to red lights at about 620nm is larger than or equal to 50%; the wavelength spectral transmittance to yellow lights at about 588nm is larger than or equal to 60% and the wavelength spectral transmittance to green lights at about 510nm is larger than or equal to 75%, thereby clearly distinguishing the red, yellow and green indicator lights at a traffic intersection, and reducing the glare effect, to which human eyes are most sensitive at 555nm so that cone cells on human retina can distinguish clear colors of red, yellow and green signal lights to reduce visual fatigue and prevent traffic accidents. Similarly, the insulating bulletproof glass may be also produced by laminating at least one piece of the glass composition and a piece of ordinary bulletproof glass plate.

Compared with the prior art, in the ultraviolet ray and infrared ray-absorbing glass composition of the present invention, an ultraviolet ray and infrared ray-absorbing glass main body coloring and coordinating part is added to basic glass components, $Fe^{+2}$ iron ions are applied to coloring of the framework foundation center, the glass main body coloring and coordinating part is applied to multi-element complementation, specific components are applied in the glass composition, a certain amount of rare metals and rare earth metal compounds are added, thereby breaking through various limitations of existing insulating glass, reasonably controlling the COD value of raw materials, controlling the reduction oxidation ratio at 0.4 to 0.8, exerting the characteristics of each elements, effectively blocking ultraviolet rays, infrared rays and the total energy, while improving the visible light transmittance and striking a spectral balance between heat energy blockage and visible light transmittance to obtain insulating glass capable of intensively absorbing ultraviolet rays and near infrared rays. There is a big breakthrough in the heat insulation performance compared with existing insulating glass. At the same time, the physical and chemical properties, mechanical strength, environmental stability and durability are also 1.3 to 1.5 times of those of ordinary glass. In deep processing and use of finished glass, the optical properties will not be changed by tempering and long-term irradiation, and the transmittance of optical properties including LTA, LTS, TSUV, TSIR and TSET etc. will not be affected, thus realizing stable physical and chemical properties and excellent safety performance. In application in fields including various vehicle window glass and building curtain wall glass etc., the insulating effect is excellent, thus greatly reducing the indoor temperature or the temperature in vehicles to have significant temperature-reducing, energy-saving and emission-reducing effect and make a great contribution to the green earth.

## BRIEF DESCRIPTION OF THE DRAWINGS

Fig. 1 is an infrared spectrogram of the first embodiment of a 2mm thick glass composition of the present invention and the first comparison example;
Fig. 2 is an infrared spectrogram of the second embodiment of a 4mm thick glass composition of the present invention;
Fig. 3 is an infrared spectrogram of the second embodiment of a 4mm thick glass composition of the present invention and the second comparison example;
Fig. 4 is an infrared spectrogram of the third embodiment of a 5mm thick glass composition of the present invention;
Fig. 5 is an infrared spectrogram of fourth embodiment of a 6mm thick glass composition of the present invention and the fourth comparison example;
Fig. 6 is an infrared spectrogram of fourth embodiment of a 12mm thick glass composition of the present invention and the fourth comparison example;
Fig. 7 is an infrared spectrum comparison diagram of a glass composition of the present invention and other existing glass; and
Fig. 8 is an infrared spectrum comparison diagram of a 4mm thick glass composition of the present invention and hollow LOW-E glass.

The infrared spectrum comparison diagrams apply waveform data measured by the Lambda-950 infrared spectromonitor of American company PerkinElmer (PE).

## DETAILED DESCRIPTION OF THE EMBODIMENTS

To improve the ultraviolet ray and infrared ray-absorbing effect of glass, the present invention provides an ultraviolet ray and infrared ray-absorbing glass composition including basic glass components and an ultraviolet ray and infrared ray-absorbing glass main body coloring and coordinating part. The ultraviolet ray and infrared ray-absorbing glass main body coloring and coordinating part: is mixed in the basic glass components to significantly improve the ultraviolet ray and infrared ray-absorbing and blocking effect of the glass,

wherein the glass composition includes the following basic glass components and ultraviolet ray and infrared ray-absorbing glass main body coloring and coordinating part, wherein the basic glass components (weight ratio) include: 60% to 75% of $SiO_2$, 8% to 20 % of $Na_2O$, 3% to 12% of CaO, 0.1% to 5% of $Al_2O_3$, 2% to 5% of MgO, 0.02% to 7% of $K_2O$, 0.1% to 5% of BaO, 0.01% to 0.4% of $SO_3$; and the ultraviolet ray and infrared ray-absorbing glass main body coloring and coordinating part includes: 0.22% to 1.35% of $Fe_2O_3$, 0.001% to 0.8% of $ZrO_2$+$HfO_2$, 0% to 0.5% of Cl, 0% to 2% of $B_2O_3$, 0.01% to 0.8% of $TiO_2$, 0.001% to 0.06% of CuO, 0% to 2.0% of Br, 0% to 0.02% of MnO, 0% to 2.0% of F, 0.001% to 0.5% of SrO, and 0.005% to 2.2% of $CeO_2$. In the present invention, the reduction oxidation ratio of $Fe_2O_3$ in the glass composition is controlled in the range of 0.4 to 0.8.

In a preferred embodiment of the present invention, besides the main components, the glass main body coloring and coordinating part may further include the following auxiliary components (weight ratio): 0% to 0.01% of $WO_3$, 0% to 0.3% of $P_2O_5$, 0% to 0.03% of ZnO, 0% to 0.015% of $Cr_2O_3$, 0% to 0.1% of $Sb_2O_3$.

In a preferred embodiment of the present invention, when the thickness of the glass composition is 2.0mm to 5.0mm, the ultraviolet ray and infrared ray-absorbing glass main body coloring and coordinating part includes the following essential components (weight ratio): 0.5% to 1.2% of $Fe_2O_3$, 0.002% to 0.5% of $ZrO_2$+$HfO_2$, 0% to 0.3% of Cl, 0% to 1% of $B_2O_3$, 0.01% to 0.5% of $TiO_2$, 0.002% to 0.01% of CuO, 0% to 1.5% of Br, 0% to 0.015% of MnO, 0% to 1.8% of F, 0.002% to 0.2% of SrO, and 0.01% to 1.8% of $CeO_2$. When the thickness of the glass composition is 6 to 15mm, in the ultraviolet ray and infrared ray-absorbing glass main body coloring and coordinating part, $Fe_2O_3$ accounts for 0.22% to 0.5%,

wherein in the present embodiment, in the glass main body coloring and coordinating part, components (weight ratio) representing a near infrared ray coordinating and absorbing part include: 0.22% to 1.35% of $Fe_2O_3$, 0.002% to 0.1% of SrO, 0.01% to 1.8% of $CeO_2$, 0% to 1.8% of F, 0.002% to 0.5% of $ZrO_2+HfO_2$; 0.001% to 0.1% of Cl, 0.01% to 0.8% of $B_2O_3$, 0.003% to 0.01% of CuO, 0% to 1% of Br and 0% to 0.015% of MnO, wherein the following optional component (weight ratio) may be further included: 0% to 0.01% of $WO_3$;

components (weight ratio) representing an ultraviolet ray absorbing part include: 0.01% to 1.8% of $CeO_2$ and 0.01% to 0.5% of $TiO_2$, wherein the following optional components (weight ratio) may be further included: 0% to 0.03% of ZnO, 0% to 0.003% of $Cr_2O_3$ and 0% to 0.1% of $Sb_2O_3$;

components (weight ratio) representing a visible light region coordinating part include: 0 to 80ppm of MnO; 0.002 % to 0.5% of $ZrO_2+HfO_2$ and 0.002% to 0.1% of SrO, wherein the following optional component (weight ratio) may be further included: 0% to 0.3% of $P_2O_5$.

Auxiliary components of ultraviolet ray and infrared ray-absorbing glass main body coloring and coordinating parts in preparation of glass compositions having a thickness of 2mm, 4mm and 5mm will be respectively illustrated as follows: when the thickness of the glass composition is 2.0mm, the auxiliary components (weight ratio) include: 0.003% to 0.01% of $WO_3$, 0.01% to 0.1% of $P_2O_5$, 0.01% to 0.03% of ZnO, 0.005% to 0.015% of $Cr_2O_3$, 0.02% to 0.1% of $Sb_2O_3$; when the thickness of the glass composition is 4.0mm, the auxiliary components (weight ratio) include: 0.005% to 0.01% of $WO_3$, 0.01% to 0.05% of $P_2O_5$, 0.005% to 0.03% of ZnO, 0% to 0.015% of $Cr_2O_3$, 0.01% to 0.05% of $Sb_2O_3$; when the thickness of the glass composition is 5.0mm, the auxiliary components (weight ratio) include: 0% to 0.01% of $WO_3$, 0.01% to 0.05% of $P_2O_5$, 0.01% to 0.05% of $Sb_2O_3$.

Spectral property parameter ranges of glass compositions of various thicknesses will be respectively described as follows,

wherein spectral property parameters include: LTA, LTS, TSUVc, TSUVb, TSUVa, TSIR, TSET, Pe and SC; in the field of traditional optics, the sun light white balance region is 380nm to 780nm; however, it is proven by modern medicine that the visual sensitivity coefficients of human eyes are as shown in Table 1. Ultraviolet lights at 380nmr to 400 nmr can be hardly seen by human eyes, and can only be seen by insects including bees etc., so ultraviolet lights at 380nmr to 400 nmr cannot be included in the sun light white balance region mmw. Therefore, it is defined by modern medicine that the sun light white balance region is located within 400nm to 760nm.

Table 1 V($\lambda$) value of visible spectrum region

| $\lambda$/nm | V($\lambda$) | $\lambda$/nm | V($\lambda$) |
|---|---|---|---|
| 400 | 0.0004 | 580 | 0.870 |
| 410 | 0.0012 | 590 | 0.757 |
| 420 | 0.0040 | 600 | 0.630 |
| 430 | 0.0116 | 610 | 0.503 |
| 440 | 0.0230 | 620 | 0.381 |
| 450 | 0.0380 | 630 | 0.265 |
| 460 | 0.0600 | 640 | 0.175 |
| 470 | 0.0910 | 650 | 0.107 |
| 480 | 0.1390 | 660 | 0.061 |
| 490 | 0.208 | 670 | 0.032 |
| 500 | 0.323 | 680 | 0.017 |
| 510 | 0.503 | 690 | 0.0082 |
| 520 | 0.710 | 700 | 0.0041 |
| 530 | 0.860 | 710 | 0.0021 |
| 540 | 0.954 | 720 | 0.0010 |
| 550 | 0.995 | 730 | 0.00052 |
| 555 | 1.000 | 740 | 0.00025 |
| 560 | 0.995 | 750 | 0.00012 |
| 570 | 0.952 | 760 | 0.00006 |

$$V(\lambda)=1 \ (\lambda=555nm); \ V(\lambda)<1 \ (\lambda \neq 555nm); \ V(\lambda)=0 \ (\lambda \text{ is not in the visible light region}).$$

When the thickness of the glass composition is 2mm, the dominant wavelength thereof is 470nm to 530nm; the LTA of the glass at 400nm to 700nm is larger than or equal to 78.1%; the LTS at 400nm to 760nm is larger than or equal to 73.2%; the TSUVc at 200nm to 300nm is smaller than or equal to 0.1%; the TSUVb at 300nm to 360nm is smaller than or equal to 3%; the TSUVa at 360nm to 400nm is smaller than or equal to 30% to facilitate sterilization and disinfection; the TSIR at 800nm to 2500nm is smaller than or equal to 16.5%; the TSET at 300nm to 2500nm is smaller than or equal to 39.3%; the Pe is smaller than or equal to 10 and the SC is smaller than or equal to 0.62.

When the thickness of the glass composition is 4mm, the dominant wavelength thereof is 470nm to 530nm; the LTA of the glass at 400nm to 700nm is larger than or equal to 73.2%; the LTS at 400nm to 760nm is larger than or equal to 70.8%; the TSUVc at 200nm to 300nm is smaller than or equal to 0.1%; the TSUVb at 300nm to 360nm is smaller than or equal to 3%; the TSUVa at 360nm to 400nm is smaller than or equal to 30% to facilitate sterilization and disinfection; the TSIR at 800nm to 2500nm is smaller than or equal to 13%; the TSET at 300nm to 2500nm is smaller than or equal to 35%; the Pe is larger than or equal to 12% and the SC is smaller than or equal to 0.54.

When the thickness of the glass composition is 5mm, the dominant wavelength thereof is 470nm to 530nm; the LTA of the glass at 400nm to 700nm is larger than or equal to 74.6%; the LTS at 400nm to 760nm is larger than or equal to 70.13%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12%; the TSET at 300nm to 2500nm is smaller than or equal to 34.5%; the Pe is larger than or equal to 15% and the SC is smaller than or equal to 0.53.

When the thickness of the glass composition is 6mm, the dominant wavelength thereof is 470nm to 530nm; the LTA of the glass at 400nm to 700nm is larger than or equal to 69.2%; the LTS at 400nm to 760nm is larger than or equal to 63.8%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 14.5%; the TSET at 300nm to 2500nm is smaller than or equal to 34.3%; the Pe is larger than or equal to 12% and the SC is smaller than or equal to 0.525.

When the thickness of the glass composition is 12mm, the dominant wavelength thereof is 470nm to 530nm; the LTA of the glass at 400nm to 700nm is larger than or equal to 66.2%; the LTS at 400nm to 760nm is larger than or equal to 62.5%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12.5%; the TSET at 300nm to 2500nm is smaller than or equal to 33.3%; the Pe is larger than or equal to 12% and the SC is smaller than or equal to 0.52.

In physical linear optics, it is very difficult to enable lights of a certain wave band to pass while enabling absorption of lights of other wave bands. Therefore, such assumption should be realized by the principle of photochemical quenching. This technology applies the reversible principle in photochemistry and photophysics, applies compounds of quenching agents and deactivators convert harmful ultraviolet energy into harmless heat energy which is released. Similarly, the rare metals and rare earth metals are produced into a glass main body coloring and coordinating part by using the quenching agents and deactivators with very high molar extinction coefficients through oxidation reduction reactions, thus effectively absorbing ultraviolet rays while absorbing near infrared rays and keeping most passages for visible lights to overcome full absorption of black bodies in physical optics, stop automatic oxidation reaction so as to obtain a compound structure having stable molecular valence. When applying the same materials, thicker glass will have lower LTA, TSIR, TSUV and TSET, higher Pe, smaller SC and better the insulating effect. A larger $Fe_2O_3$ oxidation reduction coefficient will result in lower TSET and better insulating effect.

Different from traditional insulating glass technology, this technology applies $Fe^{+2}$ iron ions to color the framework foundation center. The framework foundation center is colored in blue green by bivalent iron and yellow green by trivalent iron. The glass main body coloring and coordinating part is applied for multi-element complementation and energy coordination. Using the technologies including self-bubbling, natural diffusion, and homogenization and clarification, the melt glass is uniform and clear and the temperature difference between the upper part and lower part is small, completely satisfying requirements of a float or Glaverbel production process.

In the present invention, the adding proportion of an ultraviolet ray and infrared ray-absorbing glass main body coloring and coordinating part in basic components of conventional silicate heat-absorbing glass is determined according to different glass thicknesses to generate different tunes of heat-absorbing glass colors. The ultraviolet ray and infrared ray-absorbing glass main body coloring and coordinating part uses $Fe_2O_3$ as a base material. The reduction oxidation ratio of $Fe_2O_3$ in the glass composition is controlled in the range of 0.4 to 4.8. In glass with different thicknesses, reduction oxidation ratios are different. Ferrous oxide (FeO) which represents $Fe^{+2}$ iron accounts for 40% to 80% of the total iron ($Fe_2O_3$) content, preferably 50% to 80%. The total iron concentration of $Fe_2O_3$ is 0.22% to 1.35%. The total iron concentration refers to the percentage concentration by weight of iron elements $Fe^{+2}$ and $Fe^{+3}$ in the glass composition. The iron-to-oxygen ratio changes in the range of $Fe_{0.83-0.95}O$ (weight ratio). When the thickness of the glass composition is 2.0mm to 5.0mm, the total iron concentration of $Fe_2O_3$ in the basic glass components is 0.5% to 1.2% (weight ratio). When the thickness of the glass composition is 6mm to 15mm, the total iron concentration of $Fe_2O_3$ in the basic glass components is 0.22% to 0.5% (weight ratio), the reduction oxidation ratio is not changed and other assistants and coordinating agents may apply relatively low formulation concentrations.

In the ultraviolet ray and infrared ray-absorbing glass composition of the present invention, the glass main body coloring and coordinating part is added in basic components of soda-lime-silica glass of the components above. A part or all of the components may be combined according to the thickness of the produced glass and requirements of spectral properties to shape the glass through a float glass process or a Glaverbel process. In the basic composition of the soda-lime-silica glass, the highest total iron content is not larger than 1.35%, otherwise, the LTA will be seriously affected, wherein in the glass composition, absorbing components for auxiliary coordination in the infrared region include: $Fe_2O_3$, $CuO$, $WO_3$, $CeO_2$, $Cr_2O_3$, $B_2O_3$, $MnO$, $SrO$, $ZrO_2+HfO_2$; components for preventing glare and coordinating absorption in the visible light region include: $ZrO_2+HfO_2$, $MnO$, $SrO$ and $P_2O_5$, and components for coordinating absorption in the ultraviolet region include: $CeO_2$, $TiO_2$, $ZnO$, $Sb_2O_3$ and $Cr_2O_3$.

In addition, in the present invention, the components of the glass composition exclude any one of Ni, Cd, As, Pb, Be, SnO and SnCl. Raw materials of the elements above are eliminated, e.g. SnCl is not used as a physical decoloring agent or a near infrared assistant absorbent and it is best not to use sulfates as glass clarifying agents, because sulfate glass clarifying agents will react with Ni at high temperature and it is possible to generate nickel sulfite stones in the glass. Nickel sulfite stones, which are extremely tiny oval spheres and cannot be found through a normal detection method, will lead to spontaneous rupture of the glass due to thermal expansion and contraction during a backfire process, long-term use, a tempering process or sunlight irradiation of the glass. Therefore, use amounts and particle diameter fineness should be controlled correctly, and in particular, a clarifying agent should be used correctly to prevent generation of nickel sulfite stones and strictly prevent potential spontaneous ruptures of the glass. Thus the patent technology stops the use of nickel oxide as a near infrared assistant absorbent to greatly improve the use security of a glass composition finished product.

A method for producing the ultraviolet ray and infrared ray-absorbing glass composition of the present invention may apply a float glass process or a Glaverbel process. During preparation of the glass composition, a reducing agent is added. The reducing agent includes carbon powder and anthracite powder in a use amount of 0.005% to 0.05%, and may further include any one or two of zinc powder or copper powder.

Preferably, during preparation of the glass composition, a clarifying agent is further added. The clarifying agent includes the following components (weight ratio): 0.05% to 1% of $Na_2SO_4$, 0.01% to 1.5% of $BaSO_4$, 0.01% to 1.8% of $CeO_2$, 0.01% to 1.5% of $CaF$, and 0% to 0.2% of $Sb_2O_3$. The clarifying agent may be decomposed at high temperature during a glass melting process to generate a gas or reduce the melt glass viscosity so as to eliminate air bubbles in the melt glass.

Preferably, during preparation of the glass composition, a cleaning agent is further added. The content (weight ratio) of the cleaning agent is 0.02% to 1.5% so as to prevent fog, remove frost and clean the glass.

Embodiment 1

Taking the preparation of a 2mm thick light blue green glass composition for example, in a 2000°C-resistant zirconium oxide crucible, add the following raw material components: 500g of quartz sand, 5g of potassium feldspar, 30g of limestone, 160g of dolomite, 200g of sodium carbonate, 4g of boric oxide, 6g of fluorite, 6g of mirabilite, 1g of carbon powder, and an ultraviolet ray and infrared ray-absorbing glass main body coloring and coordinating part in an amount as required.

Uniformly mix the raw materials; add 1g of a reducing agent carbon powder to control the oxidation-reduction ratio; control the melting temperature at 1500 degrees centigrade to 1550 degrees centigrade for about 30 minutes; heat to 1500 degrees centigrade, maintain for about 30 minutes, then heat to 1530 degrees centigrade, then perform clarification and homogenization, reduce the clarification temperature from 1450 degrees centigrade to 1300 degrees centigrade for about 30 minutes, finally pour melt glass into a shaping template to be shaped, and obtain a glass composition sample after annealing, and grind, polish and analyze the sample.

It is detected that components for obtaining the glass composition are as follows:

Table 2 Glass component of glass composition at 2mm

|   | Component (weight ratio%) | Embodiment 1 | Comparison example 1 |
|---|---|---|---|
| 1 | $SiO_2$ | 62.76 | 62.36 |

(continued)

| | Component (weight ratio%) | Embodiment 1 | Comparison example 1 |
|---|---|---|---|
| 2 | $Na_2O$ | 16.93 | 16.3 |
| 3 | $Al_2O_3$ | 0.636 | 0.246 |
| 4 | $K_2O$ | 0.02 | 2.0 |
| 5 | CaO | 10.68 | 9.59 |
| 6 | MgO | 3.507 | 3.27 |
| 7 | BaO | 3.0 | 2.59 |
| 8 | F | - | 0.2 |
| 9 | Br | 0.4 | 0.7562 |
| 10 | $Fe_2O_3$ | 0.96 | 0.984 |
| 11 | $SO_3$ | 0.059 | 0.073 |
| 12 | $TiO_2$ | 0.0755 | 0.0921 |
| 13 | Cl | 0.2 | 0.01 |
| 14 | MnO | 0.008 | 0.015 |
| 15 | CuO | 0.008 | 0.007 |
| 16 | $ZrO_2+HfO_2$ | 0.013 | 0.014 |
| 17 | SrO | 0.0078 | 0.0091 |
| 18 | $CeO_2$ | 0.8 | 1.66 |
| 19 | $B_2O_3$ | 0.3 | 0.8 |
| 20 | $P_2O_5$ | - | 0.032 |
| 21 | $Sb_2O_3$ | - | 0.013 |
| 22 | ZnO | - | 0.015 |

Table 3 Oxidation reduction parameters glass composition at 2mm

| | Embodiment 1 | Comparison example 1 |
|---|---|---|
| Total iron concentration (wt%) | 0.96% | 0.984% |
| $Fe_2O_3$ (wt%) | 0.278% | 0.315% |
| FeO (wt%) | 0.682% | 0.669% |
| Oxidation reduction ratio | 0.71 | 0.68 |

Table 4 Spectral properties of glass composition at 2mm

| | Embodiment 1 | Comparison example 1 |
|---|---|---|
| LTA(%) at 510nm | 81.2% | 78.1% |
| LTS (%) at 400nm to 760nm | 74.1 % | 73.2% |
| TSUVc (%) at 200nm to 300nm | ≤0.1% | ≤0.1% |
| TSUVb (%) at 300nm to 360nm | ≤ 3% | ≤3% |
| TSUVa (%) at 360nm to 400nm | ≤30% | ≤30% |
| TSIR (%) at 800nm to 2500nm | 16.5% | 15.7% |

(continued)

|  | Embodiment 1 | Comparison example 1 |
|---|---|---|
| TSET (%) at 300nm to 2500nm | 39.3% | 39.6% |
| Pe(%) | 10% | 10% |
| SC | 0.62 | 0.61 |

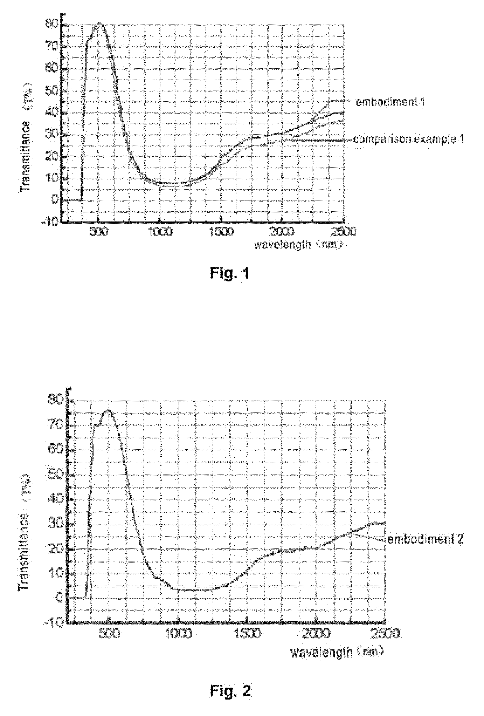

Table 2 shows glass components of 2mm thick glass compositions in the first embodiment and the first comparison example. Table 3 shows the $Fe_2O_3$ oxidation reduction parameters in the first embodiment and the first comparison example. Comparing the first embodiment and the first comparison, the spectral properties of the glass compositions are changed by applying different amounts of glass main body coloring and coordinating parts and controlling the $Fe_2O_3$ oxidation reduction ratios. Table 4 shows spectral property parameter values of the first embodiment and the first comparison example. Referring to Fig. 1, spectral property curves of the glass compositions of the first embodiment and the first comparison example are illustrated. It can be seen from Fig. 1 that the oxidation reduction ratio of the first comparison example is slightly higher than that of the first embodiment, then the TSET is smaller and better insulating effect is realized.

Embodiment 2

Taking the preparation of a 4mm thick blue green glass composition for example, in a 2000°C-resistant zirconium oxide crucible, add the following raw material components: 530g of quartz sand, 8g of potassium feldspar, 20g of limestone, 155g of dolomite, 190g of sodium carbonate, 3g of boric oxide, 5g of fluorite, 6g of mirabilite, 1g of carbon powder, and an ultraviolet ray and infrared ray-absorbing glass main body coloring and coordinating part in an amount as required. The preparation method of the glass composition is as described above and will not be repeated.
Components for obtaining the glass composition are as follows:

Table 5 Glass component of glass composition at 4mm

|  | Component (weight ratio%) | Embodiment 2 | Comparison example 2 |
|---|---|---|---|
| 1 | $SiO_2$ | 67.73 | 69.3 |
| 2 | $Na_2O$ | 10.06 | 10.9 |
| 3 | $Al_2O_3$ | 2.6 | 1.88 |
| 4 | $K_2O$ | 3.972 | 3.539 |
| 5 | CaO | 8.485 | 8.109 |
| 6 | MgO | 3.819 | 3.695 |
| 7 | BaO | 1.13 | 1.3 |
| 8 | F | 0.45 | 0.3 |
| 9 | Br | - | 0.4914 |
| 10 | $Fe_2O_3$ | 0.736 | 0.8342 |
| 11 | $SO_3$ | 0.019 | 0.023 |
| 12 | $TiO_2$ | 0.019 | 0.0993 |
| 13 | Cl | 0.021 | 0.034 |
| 14 | MnO | 0.009 | 0.008 |
| 15 | CuO | 0.007 | 0.006 |
| 16 | $ZrO_2+HfO_2$ | 0.1202 | 0.15 |
| 17 | SrO | 0.0085 | 0.009 |
| 18 | $CeO_2$ | 0.295 | 0.4 |
| 19 | $B_2O_3$ | 0.25 | 0.2 |

(continued)

|  | Component (weight ratio%) | Embodiment 2 | Comparison example 2 |
|---|---|---|---|
| 20 | $WO_3$ | - | 0.003 |
| 21 | $Cr_2O_3$ | - | 5ppm |

Table 6 Oxidation reduction parameters glass composition at 4mm

|  | Embodiment 2 | Comparison example 2 |
|---|---|---|
| Total iron concentration (wt%) | 0.736% | 0.834% |
| $Fe_2O_3$ (wt%) | 0.294% | 0.35% |
| FeO (wt%) | 0.442% | 0.484% |
| Oxidation reduction ratio | 0.601 | 0.58 |

Table 7 Spectral properties of glass composition at 4mm

|  | Embodiment 2 | Comparison example 2 |
|---|---|---|
| LTA(%) at 510nm | 75.6% | 73.2% |
| LTS (%) at 400nm to 760nm | 71.2% | 70.8% |
| TSUVc (%) at 200nm to 300nm | $\leq 0.1\%$ | $\leq 0.1\%$ |
| TSUVb (%) at 300nm to 360nm | $\leq 2\%$ | $\leq 2\%$ |
| TSUVa (%) at 360nm to 400nm | $\leq 30\%$ | $\leq 30\%$ |
| TSIR (%) at 800nm to 2500nm | 13% | 12.5% |
| TSET (%) at 300nm to 2500nm | 35% | 34.5% |
| Pe (%) | 12% | 12% |
| SC | 0.54 | 0.53 |

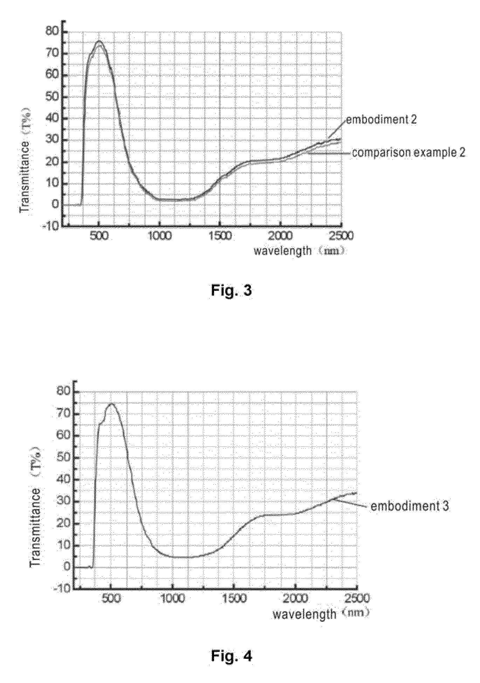

Table 5 shows glass components of 4mm thick glass compositions in the second embodiment and the second comparison example. Table 6 shows the $Fe_2O_3$ oxidation reduction parameters in the second embodiment and the second comparison example. Comparing the second embodiment and the second comparison, the spectral properties of the glass compositions are changed by applying different amounts of glass main body coloring and coordinating parts and controlling the $Fe_2O_3$ oxidation reduction ratios. Table 7 shows spectral property parameter values of the second embodiment and the second comparison example. Referring to Fig. 2 and Fig. 3, spectral property curves of the glass compositions of the second embodiment and the second comparison example are illustrated. It can be seen from Fig. 3 that the oxidation reduction ratio of the second comparison example is slightly higher than that of the second embodiment, then the TSET is smaller and better insulating effect is realized.

Embodiment 3

Taking the preparation of a 5mm thick blue green glass composition for example, in a 2000°C-resistant zirconium oxide crucible, add the following raw material components: 550g of quartz sand, 6g of potassium feldspar, 15g of limestone, 160g of dolomite, 195g of sodium carbonate, 3g of boric oxide, 5g of fluorite, 6g of mirabilite, 1g of carbon powder, and an ultraviolet ray and infrared ray-absorbing glass main body coloring and coordinating part in an amount as required. The preparation method of the glass composition is as described above and will not be repeated.
Components for obtaining the glass composition are as follows:

Table 8 Glass component of glass composition at 5mm

|  | Component (weight ratio%) | Embodiment 3 |
|---|---|---|
| 1 | $SiO_2$ | 68.5 |
| 2 | $Na_2O$ | 11.5 |
| 3 | $Al_2O_3$ | 2.1 |
| 4 | $K_2O$ | 4.5 |
| 5 | CaO | 9.35 |
| 6 | MgO | 4.5 |
| 7 | BaO | 2.2 |
| 8 | Br | 0.87 |
| 9 | $Fe_2O_3$ | 0.716 |
| 10 | $SO_3$ | 0.02 |
| 11 | $TiO_2$ | 0.2 |
| 12 | Cl | 0.032 |
| 13 | MnO | 0.009 |
| 14 | CuO | 0.007 |
| 15 | $ZrO_2+HfO_2$ | 0.015 |
| 16 | SrO | 0.0085 |
| 17 | $CeO_2$ | 0.49 |
| 18 | $B_2O_3$ | 0.15 |
| 19 | $WO_3$ | 0.001% |
| 20 | $P_2O_5$ | 0.03% |
| 21 | $Sb_2O_3$ | 0.05% |

Table 9 Oxidation reduction parameters glass composition at 5mm

|  | Embodiment 3 |
|---|---|
| Total iron concentration (wt%) | 0.716% |
| $Fe_2O_3$ (wt%) | 0.301% |
| FeO (wt%) | 0.415% |
| Oxidation reduction ratio | 0.58 |

Table 10 Spectral properties of glass composition at 5mm

|  | Embodiment 3 |
|---|---|
| LTA (%) at 510nm | 74.6% |
| LTS (%) at 400nm to 760nm | 70.13% |
| TSUVc (%) at 200nm to 300nm | <0.1% |
| TSUVb (%) at 300nm to 360nm | <2% |
| TSUVa (%) at 360nm to 400nm | <30% |
| TSIR (%) at 800nm to 2500nm | 12% |

(continued)

|  | Embodiment 3 |
|---|---|
| TSET (%) at 300nm to 2500nm | 34.5% |
| Pe(%) | 15% |
| SC | 0.53 |

Combination with Fig. 4, it can be seen that the 5mm thick glass composition has the spectral property parameters above.

Embodiment 4

Taking the preparation of a 6mm thick blue green glass composition for example, in a 2000°C-resistant zirconium oxide crucible, add the following raw material components: 555g of quartz sand, 5g of potassium feldspar, 20g of limestone, 160g of dolomite, 190g of sodium carbonate, 5g of boric oxide, 6g of fluorite, 6g of mirabilite, 1g of carbon powder, and an ultraviolet ray and infrared ray-absorbing glass main body coloring and coordinating part in an amount as required. The preparation method of the glass composition is as described above and will not be repeated.

Components for obtaining the glass composition are as follows:

Table 11 Glass component of glass composition at 6mm

|  | Component (weight ratio%) | Embodiment 4 | Comparison example 4 |
|---|---|---|---|
| 1 | $SiO_2$ | 67.01 | 65.83 |
| 2 | $Na_2O$ | 12.4 | 10.01 |
| 3 | $Al_2O_3$ | 1.63 | 2.1 |
| 4 | $K_2O$ | 3.0 | 3.998 |
| 5 | CaO | 8.687 | 8.364 |
| 6 | MgO | 3.777 | 3.962 |
| 7 | BaO | 0.181 | 2.26 |
| 8 | F | 1.2 | 0.8 |
| 9 | Br | 0.6035 | 0.572 |
| 10 | $Fe_2O_3$ | 0.43 | 0.466 |
| 11 | $SO_3$ | 0.0901 | 0.0913 |
| 12 | $TiO_2$ | 0.265 | 0.021 |
| 13 | Cl | 0.0959 | 0.027 |
| 14 | MnO | 0.008 | 0.008 |
| 15 | CuO | 0.007 | 0.007 |
| 16 | $ZrO_2+HfO_2$ | 0.0225 | 0.1865 |
| 17 | SrO | 0.007 | 0.01 |
| 18 | $CeO_2$ | 0.261 | 0.286 |
| 19 | $B_2O_3$ | 0.1 | 0.15 |
| 20 | $P_2O_5$ | - | 0.015 |
| 21 | ZnO | - | 0.005 |
| 22 | $Cr_2O_3$ | - | 0.008 |

Table 12 Oxidation reduction parameters glass composition at 6mm

|  | Embodiment 4 | Comparison example 4 |
|---|---|---|
| Total iron concentration (wt%) | 0.43% | 0.466% |
| $Fe_2O_3$ (wt%) | 0.189% | 0.196% |
| FeO (wt%) | 0.241% | 0.27% |
| Oxidation reduction ratio | 0.56 | 0.58 |

Table 13 Spectral properties of glass composition at 6mm

|  | Embodiment 4 | Comparison example 4 |
|---|---|---|
| LTA(%) at 510nm | 71.2% | 69.5% |
| LTS (%) at 400nm to 760nm | 64.5% | 63.8% |
| TSUVc (%) at 200nm to 300nm | ≤0.1% | ≤0.1% |
| TSUVb (%) at 300nm to 360nm | ≤2% | ≤2% |
| TSUVa (%) at 360nm to 400nm | ≤30% | ≤30% |
| TSIR (%) at 800nm to 2500nm | 14.5% | 14.1% |
| TSET (%) at 300nm to 2500nm | 34.3% | 34.1% |
| Pe (%) | 12% | 12% |
| SC | 0.525 | 0.52 |

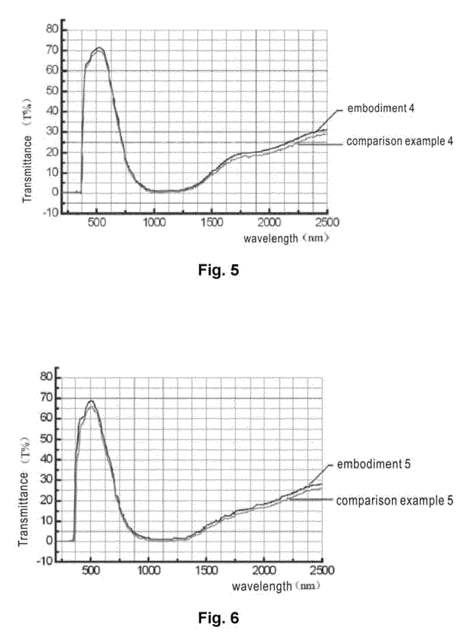

Table 11 shows glass components of 6mm thick glass compositions in the fourth embodiment and the fourth comparison example. Table 12 shows the $Fe_2O_3$ oxidation reduction parameters in the fourth embodiment and the fourth comparison example. Comparing the fourth embodiment and the fourth comparison, the spectral properties of the glass compositions are changed by applying different amounts of glass main body coloring and coordinating parts and controlling the $Fe_2O_3$ oxidation reduction ratios. Table 13 shows spectral property parameter values of the fourth embodiment and the fourth comparison example. Referring to Fig. 5, spectral property curves of the fourth embodiment and the fourth comparison example are illustrated. It can be seen from Fig. 5 that the oxidation reduction ratio of the fourth comparison example is slightly higher than that of the fourth embodiment, then the TSET is smaller and better insulating effect is realized.

Embodiment 5

Taking the preparation of a 12mm thick blue green glass composition for example, in a 2000°C-resistant zirconium oxide crucible, add the following raw material components: 590g of quartz sand, 5g of potassium feldspar, 15g of limestone, 160g of dolomite, 190g of sodium carbonate, 40g of boric oxide, 6g of fluorite, 6g of mirabilite, 1g of carbon powder, and an ultraviolet ray and infrared ray-absorbing glass main body coloring and coordinating part in an amount as required. The preparation method of the glass composition is as described above and will not be repeated.
Components for obtaining the glass composition are as follows:

Table 14 Glass component of glass composition at 12mm

|  | Component (weight ratio%) | Embodiment 5 | Comparison example 5 |
|---|---|---|---|
| 1 | $SiO_2$ | 70.29 | 70.13 |
| 2 | $Na_2O$ | 14.01 | 13.05 |
| 3 | $Al_2O_3$ | 0.419 | 0.45 |
| 4 | $K_2O$ | 0.291 | 0.6 |
| 5 | CaO | 9.28 | 10.2 |

(continued)

|  | Component (weight ratio%) | Embodiment 5 | Comparison example 5 |
|---|---|---|---|
| 6 | MgO | 2.967 | 3.9 |
| 7 | BaO | 0.25 | 0.5 |
| 8 | F | 0.5 | 0.45 |
| 9 | Br | 0.3 | 0.35 |
| 10 | $Fe_2O_3$ | 0.38 | 0.368 |
| 11 | $SO_3$ | 0.137 | 0.15 |
| 12 | $TiO_2$ | 0.295 | 0.31 |
| 13 | Cl | 0.036 | 0.04 |
| 14 | MnO | 0.011 | 0.013 |
| 15 | CuO | 0.01 | 0.012 |
| 16 | $ZrO_2 + HfO_2$ | 0.0016 | 0.002 |
| 17 | SrO | 0.1189 | 0.23 |
| 18 | $CeO_2$ | 0.976 | 0.974 |
| 19 | $B_2O_3$ | 0.513 | 0.45 |
| 20 | $Sb_2O_3$ | 0.0534 | 0.05 |
| 21 | $WO_3$ | 0.036 | 0.03 |

Table 15 Oxidation reduction parameters glass composition at 12mm

|  | Embodiment 5 | Comparison example 5 |
|---|---|---|
| Total iron concentration (wt%) | 0.38% | 0.368% |
| $Fe_2O_3$ (wt%) | 0.084% | 0.077% |
| FeO (wt%) | 0.297% | 0.291% |
| Oxidation reduction ratio | 0.78 | 0.79 |

Table 16 Spectral properties of glass composition at 12mm

|  | Embodiment 5 | Comparison example 5 |
|---|---|---|
| LTA(%) at 510nm | 68.9% | 66.2% |
| LTS (%) at 400nm to 760nm | 63.1% | 62.5% |
| TSUVc (%) at 200nm to 300nm | ≤0.1% | ≤0.05% |
| TSUVb (%) at 300nm to 360nm | ≤2% | ≤2% |
| TSUVa (%) at 360nm to 400nm | ≤30% | ≤30% |
| TSIR (%) at 800nm to 2500nm | 12.5% | 12% |
| TSET (%) at 300nm to 2500nm | 33.3% | 33.2% |
| Pe (%) | 15% | 15% |
| SC | 0.52 | 0.52 |

Table 14 shows glass components of 12mm thick glass compositions in the fifth embodiment and the fifth comparison example. Table 15 shows the $Fe_2O_3$ oxidation reduction parameters in the fifth embodiment and the fifth comparison example. Comparing the fifth embodiment and the fifth comparison, the spectral properties of the glass compositions are changed by applying different amounts of glass main body coloring and coordinating parts and controlling the $Fe_2O_3$ oxidation reduction ratios. Table 16 shows spectral property parameter values of the fifth embodiment and the fifth comparison example. Referring to Fig. 6, spectral property curves of the fifth embodiment and the fifth comparison example are illustrated. It can be seen from Fig. 6 that the oxidation reduction ratio of the fifth comparison example is slightly higher than that of the fifth embodiment, then the TSET is smaller and better insulating effect is realized, wherein components of the glass compositions are detected by a Germany Bruke-S4X ray fluorescence spectrophotometer, and the spectral property parameters of the glass compositions are detected an American Lambda-950 infrared spectrometer.

The glass composition of the present invention may be shaped by a float glass process or a Glaverbel process, and is used separately or laminated with ordinary float/Glaverbel glass to synthesize safe glass. The glass composition, is applied to glass for various building doors and windows, curtain wall glass, roof lighting, insulating and waterproof glass, building insulating glass and glass plates, or laminated with an ordinary bulletproof glass plate to produce bulletproof and insulating glass, and the application is broad and not limited thereby,

wherein the ultraviolet ray and infrared ray-absorbing glass composition of the present invention may be further applied to producing vehicle window glass which is produced by tempering at least one piece of the ultraviolet ray and infrared ray-absorbing glass composition, or is produced by laminating at least one piece of the ultraviolet ray and infrared ray-absorbing glass composition and at least one piece of ordinary float or Glaverbel glass. The vehicle window glass may be applied to a front windshield. On the basis of satisfying LTA≥70%, the wavelength spectrum transmittance of red lights at 620nm should be larger than or equal to 50%, the wavelength spectrum transmittance of yellow lights at 588nm should be larger than or equal to 60% and the wavelength spectrum transmittance of green lights at 510nm should be larger than or equal to 75% so as to clearly distinguish the red, yellow and green indicator lights at a traffic intersection. A proper amount (0% to 0.008%) of a coordinating agent is added to reduce the glare effect, to which human eyes are most sensitive at 555nm so that cone cells on human retina can distinguish clear colors of red, yellow and green signal lights to reduce visual fatigue and prevent traffic accidents. The thickness of the glass composition may be in the range of 1.5mm to 15mm. The ultraviolet ray and infrared ray-absorbing glass composition of the present invention may be further applied to producing insulating bulletproof glass which is produced by laminating at least one piece of the ultraviolet ray and infrared ray-absorbing glass composition and a piece of ordinary bulletproof glass plate.

Taking vehicle window glass for example, the vehicle window glass is almost white and slightly blue green soda-lime silicate glass having super heat absorptivity and capable of preventing atomization of rain and dew and attachment of ice and snow. The transmittance of blue light in sunlight is larger than or equal to 65% and the transmittance of green light is larger than or equal to 75% so as to stimulate retinal ganglial cells, thus achieving a refreshing effect. For 4mm thick glass, the LTA at 400nm to 700nm is 70% to 75%; the LTS at 400nm to 760nm is 62% to 75%; the color is characterized by a dominant wavelength DW(nm) of 470nm to 530nm. The TSUVc at 200nm to 300nm is higher than 99.9%, the TSUVb at 300nm to 360nm is higher than 98%, and the TSUVa at 360nm to 400nm is controlled to be smaller than or larger than 30% to facilitate sterilization and disinfection; the TSIR at 800nm to 2500nm higher than 90%; the TSET at 300nm to 2500nm 30% to 40%, the Pe is 8% to 15% and the Sc is 0.52 to 0.62. By changing the use amounts of glass main body coloring and coordinating parts and $Fe_2O_3$ oxidation reduction ratios, different glass spectral properties as follows are obtained:

Table 17 Relations among Sc, TSET and LTA

| Sc | 0.53 | 0.54 | 0.58 | 0.6 | 0.62 |
|------|--------|--------|--------|--------|--------|
| TSET | 34.5% | 35% | 35.3% | 37.4% | 39.3% |
| LTA | ≥73.2% | ≥75.6% | ≥76.5% | ≥77.3% | ≥78.1% |

Referring to Table 17, the larger the Sc of the glass composition is, the larger the TSET and the higher the LTA will be.

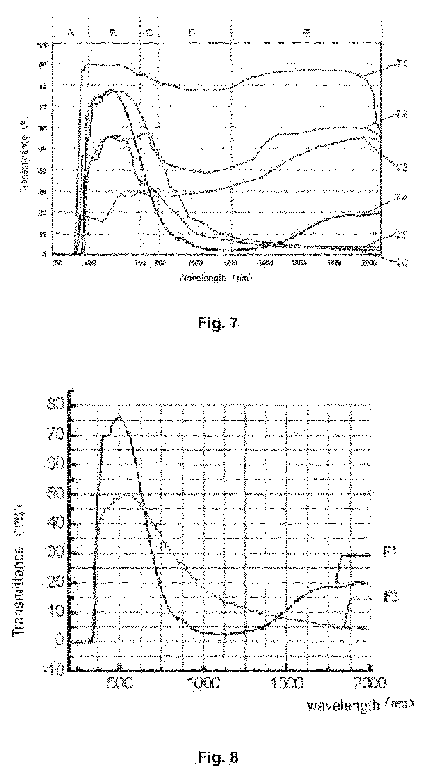

Fig. 7 shows a spectrum property comparison diagram of a glass composition of the present invention and other glass, wherein region A is an ultraviolet light region at 200nm to 400nm, region B is a visible light region at 400nm to 700nm, region C is a visible light-near-infrared light transition region at 700nm to 800, region D is a red-hot infrared light region at 800nm to 1200nm and region E is a near-infrared light region at 1200nm to 2000nm. Most solar heat is concentrated in region D. Curve 71 represents ordinary glass, curve 72 represents heat absorbing glass, curve 73 represents glass coated with a reflecting film, curve 74 represents the glass of the present invention, curve 75 presents online coated LOW-E glass, and curve 76 represents offline magnetron sputtering coated LOW-E glass. As shown in Fig. 7, compared with various other glass, the TSET of the glass of the present invention is the lowest in the red-hot infrared light region and the insulating effect is obviously superior. In the visible light region, the LTA is lower than that of ordinary glass, but higher than various insulating glass and may completely replace various high cost LOW-E glass. There are notable technological advances in the field of insulating glass.

Referring to Fig. 8, in an infrared spectrogram, curve F1 is an infrared spectrogram curve of 4mm glass of the present application, and curve F2 is an infrared spectrogram curve of existing hollow LOW-E glass. Through comparison, the spectral properties of the glass of the present invention are obviously better than those of the hollow LOW-E glass.

The above are only preferred embodiments of the present invention, and of course, the claim scope of the present invention cannot be limited thereby. Therefore, equivalent changes made according to the claims of the present invention still belong to the scope covered by the present invention.

**Claims**

1.  An ultraviolet ray and infrared ray-absorbing glass composition, comprising the following basic glass components (weight ratio):

    60% to 75% of $SiO_2$, 8% to 20 % of $Na_2O$, 3% to 12% of CaO, 0.1% to 5% of $Al_2O_3$, 2% to 5% of MgO, 0.02% to 7% of $K_2O$, 0.1% to 5% of BaO, 0.01% to 0.4% of $SO_3$; and
    the following ultraviolet ray and infrared ray-absorbing glass main body coloring and coordinating part (weight ratio):
    0.22% to 1.35% of $Fe_2O_3$, 0.001% to 0.8% of $ZrO_2+HfO_2$, 0% to 0.5% of Cl, 0% to 2% of $B_2O_3$, 0.01% to 0.8% of $TiO_2$, 0.001% to 0.06% of CuO, 0% to 2.0% of Br, 0% to 0.02% of MnO, 0% to 2.0% of F, 0.001% to 0.5% of SrO, and 0.005% to 2.2% of $CeO_2$.

2.  The ultraviolet ray and infrared ray-absorbing glass composition according to claim 1, wherein the ultraviolet ray and infrared ray-absorbing glass main body coloring and coordinating part further comprises the following auxiliary components (weight ratio):

    0% to 0.01% of $WO_3$, 0% to 0.3% of $P_2O_5$, 0% to 0.03% of ZnO, 0% to 0.015% of $Cr_2O_3$, 0% to 0.1% of $Sb_2O_3$.

3.  The ultraviolet ray and infrared ray-absorbing glass composition according to claim 2, wherein when the thickness of the glass composition is 2.0mm to 5.0mm, the ultraviolet ray and infrared ray-absorbing glass main body coloring and coordinating part comprises the following components (weight ratio):

    0.5% to 1.2% of $Fe_2O_3$, 0.002% to 0.5% of $ZrO_2+HfO_2$, 0% to 0.3% of Cl, 0% to 1% of $B_2O_3$, 0.01% to 0.5% of $TiO_2$, 0.002% to 0.01% of CuO, 0% to 1.5% of Br, 0% to 0.015% of MnO, 0% to 1.8% of F, 0.002% to 0.2% of SrO, and 0.01% to 1.8% of $CeO_2$.

4.  The ultraviolet ray and infrared ray-absorbing glass composition according to claim 3, wherein when the thickness of the glass composition is 2.0mm, the auxiliary components (weight ratio) in the ultraviolet ray and infrared ray-absorbing glass main body coloring and coordinating part comprise:

    0.003% to 0.01 % of $WO_3$, 0.01 % to 0.1 % of $P_2O_5$, 0.01 % to 0.03% of ZnO, 0.005% to 0.015% of $Cr_2O_3$, 0.02% to 0.1% of $Sb_2O_3$;
    when the thickness of the glass composition is 4.0mm, the auxiliary components (weight ratio) in the ultraviolet ray and infrared ray-absorbing glass main body coloring and coordinating part comprise:

    0.005% to 0.01% of $WO_3$, 0.01% to 0.05% of $P_2O_5$, 0.005% to 0.03% of ZnO, 0% to 0.015% of $Cr_2O_3$, 0.01% to 0.05% of $Sb_2O_3$;
    when the thickness of the glass composition is 5.0mm, the auxiliary components (weight ratio) in the ultraviolet ray and infrared ray-absorbing glass main body coloring and coordinating part comprise: 0% to 0.01% of $WO_3$, 0.01% to 0.05% of $P_2O_5$, 0.01% to 0.05% of $Sb_2O_3$.

5.  The ultraviolet ray and infrared ray-absorbing glass composition according to claim 1, wherein the reduction oxidation ratio of $Fe_2O_3$ in the glass composition is 0.4 to 0.8.

6.  The ultraviolet ray and infrared ray-absorbing glass composition according to claim 4, wherein when the thickness of the glass composition is 2mm, the dominant wavelength thereof is 470nm to 530nm; the transmittance of visible light (LTA) of the glass at 400nm to 700nm is larger than or equal to 78.1%; the sunlight white balance transmittance (LTS) at 400nm to 760nm is larger than or equal to 73.2%; the transmittance of UVc (TSUVc) at 200nm to 300nm is smaller than or equal to 0.1%; the TSUVb at 300nm to 360nm is smaller than or equal to 3%; the Transmittance of UVa (TSUVa) at 360nm to 400nm is smaller than or equal to 30% to facilitate sterilization and disinfection; the Transmittance of infrared ray (TSIR) at 800nm to 2500nm is smaller than or equal to 16.5%; the Total Solar Energy Transmittance (TSET) at 300nm to 2500nm is smaller than or equal to 39.3%; the excitation purity (Pe) is smaller than or equal to 10 and the Shading Coefficient (SC) is smaller than or equal to 0.62;

when the thickness of the glass composition is 4mm, the dominant wavelength thereof is 470nm to 530nm; the LTA of the glass at 400nm to 700nm is larger than or equal to 73.2%; the LTS at 400nm to 760nm is larger than or equal to 70.8%; the TSUVc at 200nm to 300nm is smaller than or equal to 0.1%; the TSUVb at 300nm to 360nm is smaller than or equal to 3%; the TSUVa at 360nm to 400nm is smaller than or equal to 30% to facilitate sterilization and disinfection; the TSIR at 800nm to 2500nm is smaller than or equal to 13%; the TSET at 300nm to 2500nm is smaller than or equal to 35%; the Pe is larger than or equal to 12% and the SC is smaller than or equal to 0.54;

when the thickness of the glass composition is 5mm, the dominant wavelength thereof is 470nm to 530nm; the LTA of the glass at 400nm to 700nm is larger than or equal to 74.6%; the LTS at 400nm to 760nm is larger than or equal to 70.13%; the TSUVc at 200nm to 300nm is smaller than or equal to 0.1%; the Transmittance of UVb (TSUVb) at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12%; the TSET at 300nm to 2500nm is smaller than or equal to 34.5%; the Pe is larger than or equal to 15% and the SC is smaller than or equal to 0.53.

7. The ultraviolet ray and infrared ray-absorbing glass composition according to claim 6, wherein the TSIR at 800nm to 1200nm is smaller than or equal to 4%, and the TSIR at 800nm to 1500nm is smaller than or equal to 10%.

8. The ultraviolet ray and infrared ray-absorbing glass composition according to claim 1, wherein when the thickness of the glass composition is 6mm to 15mm, in the ultraviolet ray and infrared ray-absorbing glass main body coloring and coordinating part, $Fe_2O_3$ accounts for 0.22% to 0.5%.

9. The ultraviolet ray and infrared ray-absorbing glass composition according to claim 8, wherein when the thickness of the glass composition is 6mm, the dominant wavelength thereof is 470nm to 530nm; the LTA of the glass at 400nm to 700nm is larger than or equal to 69.2%; the LTS at 400nm to 760nm is larger than or equal to 63.8%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 14.5%; the TSET at 300nm to 2500nm is smaller than or equal to 34.3%; the Pe is larger than or equal to 12% and the SC is smaller than or equal to 0.525.

10. The ultraviolet ray and infrared ray-absorbing glass composition according to claim 8, wherein when the thickness of the glass composition is 12mm, the dominant wavelength thereof is 470nm to 530nm; the LTA of the glass at 400nm to 700nm is larger than or equal to 66.2%; the LTS at 400nm to 760nm is larger than or equal to 62.5%; the TSUVc at 200nm to 300nm is smaller than or equal to 0.1%; the TSUVb at 300nm to 360nm is smaller than or equal to 2%; the TSUVa at 360nm to 400nm is smaller than or equal to 30% to facilitate sterilization and disinfection; the TSIR at 800nm to 2500nm is smaller than or equal to 12.5%; the TSET at 300nm to 2500nm is smaller than or equal to 33.3%; the Pe is larger than or equal to 15% and the SC is smaller than or equal to 0.52.

11. The ultraviolet ray and infrared ray-absorbing glass composition according to claim 1, wherein the components of the glass composition exclude any one of Ni, Cd, As, Pb and Be.

12. The ultraviolet ray and infrared ray-absorbing glass composition according to claim 1, wherein the glass composition is shaped by a float glass process or a Glaverbel process.

13. An application of the ultraviolet ray and infrared ray-absorbing glass composition according to claim 1, wherein it is applied to glass for building doors and windows, curtain wall glass, roof lighting, insulating and waterproof glass, vehicle window glass or bulletproof glass.

14. The application of the ultraviolet ray and infrared ray-absorbing glass composition according to claim 13, wherein the vehicle window glass is produced by tempering at least one piece of the ultraviolet ray and infrared ray-absorbing glass composition according to claim 1, or by laminating at least one piece of the ultraviolet ray and infrared ray-absorbing glass composition according to claim 1 and at least one piece of ordinary float or Glaverbel glass.

**15.** The application of the ultraviolet ray and infrared ray-absorbing glass composition according to claim 14, wherein the vehicle window glass is a front windshield; the LTA is larger than or equal to 70%; the spectral transmittance to green lights having a wavelength of about 620nm is larger than or equal to 75%, the spectral transmittance to yellow lights having a wavelength of about 588nm is larger than or equal to 60, and the spectral transmittance to yellow lights having a wavelength of about 510nm is larger than or equal to 75%, thereby clearly distinguishing the red, yellow and green indicator lights at a traffic intersection.

**16.** The application of the ultraviolet ray and infrared ray-absorbing glass composition according to claim 15, wherein the insulating bulletproof glass is produced by laminating at least one piece of the ultraviolet ray and infrared ray-absorbing glass composition according to claim 1 and a piece of ordinary bulletproof glass plate.

Fig. 1

Fig. 2

**Fig. 3**

**Fig. 4**

Fig. 5

Fig. 6

**Fig. 7**

**Fig. 8**

**EP 3 070 061 A1**

# INTERNATIONAL SEARCH REPORT

International application No.

**PCT/CN2013/087457**

**A. CLASSIFICATION OF SUBJECT MATTER**

C03C 4/08 (2006.01) i; C03C 3/087 (2006.01) i

According to International Patent Classification (IPC) or to both national classification and IPC

**B. FIELDS SEARCHED**

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

VEN, CNABS, CNKI, ISI, EI: infrared, ultrared, ir, uv, ultraviolet, violet, vitalight, sunray, iron, fe, feo, fe203, tantinia, titanium, ti, tio, tio2, cuo, cu, copper, sr, sro, strontia, strontium, ce, ceo, ceria, cerium

**C. DOCUMENTS CONSIDERED TO BE RELEVANT**

| Category* | Citation of document, with indication, where appropriate, of the relevant passages | Relevant to claim No. |
|---|---|---|
| X | CN 1137262 A (SAINT GOBAIN VITRAGE), 04 December 1996 (04.12.1996), claims 1-15, and description, page 1, paragraphs 1-3, page 2, paragraph 6 to page 7, paragraph 4, and page 9, paragraphs 1-5 | 1-16 |
| A | CN 102917993 A (PPG INDUSTRIES OHIO, INC.), 06 February 2013 (06.02.2013), the whole document | 1-16 |
| A | US 2007037687 A1 (GUARDIAN IND CORP.), 15 February 2007 (15.02.2007), the whole document | 1-16 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July 2014 (17.07.2014) | **01 September 2014 (01.09.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Shimin** Telephone No.: (86-10) **62084850** |

Form PCT/ISA/210 (second sheet) (July 2009)

24

## INTERNATIONAL SEARCH REPORT
### Information on patent family members

| | | International application No. |
| --- | --- | --- |
| | | PCT/CN2013/087457 |

| Patent Documents referred in the Report | Publication Date | Patent Family | Publication Date |
| --- | --- | --- | --- |
| CN 1137262 A | 04 December 1996 | CZ 289433 B6 | 16 January 2002 |
| | | JP 4447658 B2 | 07 April 2010 |
| | | EP 0722427 B1 | 20 August 2003 |
| | | HU 9600412 D0 | 29 April 1996 |
| | | US 5837629 A | 17 November 1998 |
| | | PT 722427 E | 30 January 2004 |
| | | FR 2721599 A1 | 29 December 1995 |
| | | DE 69531533 T2 | 24 June 2004 |
| | | PL 313115 A1 | 10 June 1996 |
| | | CO 4520142 A1 | 15 October 1997 |
| | | RU 2145309 C1 | 10 February 2000 |
| | | SI 722427 T1 | 29 February 2004 |
| | | RO 115869 B1 | 28 July 2000 |
| | | ES 2204959 T3 | 01 May 2004 |
| | | PL 191639 B1 | 30 June 2006 |
| | | PT 722427 T | 30 January 2004 |
| | | EP 0722427 A1 | 24 July 1996 |
| | | CN 1087275 C | 10 July 2002 |
| | | CA 2169936 A1 | 04 January 1996 |
| | | FR 2721599 B1 | 09 August 1996 |
| | | HU T75982 A | 28 May 1997 |
| | | JP H09502420 A | 11 March 1997 |
| | | EP 0722427 B9 | 17 March 2004 |
| | | MX 9600597 A | 28 June 1997 |
| | | HU 225278 B1 | 28 August 2006 |
| | | DE 69531533 D1 | 25 September 2003 |
| | | BR 9506042 A | 05 August 1997 |
| | | CZ 9600562 A3 | 14 August 1996 |
| | | CA 2169936 C | 25 October 2005 |
| | | WO 9600194 A1 | 04 January 1996 |
| | | KR 100383158 B1 | 29 September 2003 |
| CN 102917993 A | 06 February 2013 | WO 2011150002 A1 | 01 December 2011 |
| | | US 2011291436 A1 | 01 December 2011 |
| | | KR 20130024929 A | 08 March 2013 |
| | | JP 2013530117 A | 25 July 2013 |
| | | US 8440583 B2 | 14 May 2013 |
| | | DE 112011101814 T5 | 28 March 2013 |
| US 2007037687 A1 | 15 February 2007 | US 7538054 B2 | 26 May 2009 |
| | | CA 2617043 A1 | 22 February 2007 |
| | | WO 2007021432 A8 | 25 October 2007 |
| | | EP 1912910 A2 | 23 April 2008 |
| | | WO 2007021432 A3 | 22 May 2008 |
| | | WO 2007021432 A2 | 22 February 2007 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 94191094
- US 4381934 A
- US 4886539 A
- US 4792536 A
- US 97113805 B
- US 98810129 B
- US 98808824 B
- US 200480031885 A
- US 200680011222 A
- CN 03117080
- CN 200410051479
- CN 200510107206
- CN 200810072276
- CN 201110189471